# DEMANDE DE BREVET EUROPEEN

(11) **EP 1 852 193 A1**
(43) Date de publication de la demande: **07.11.2007**
(21) Numéro de dépôt: 07300953.2
(22) Date de dépôt: 16.04.2007
(51) Int. Cl.: B08B 9/049, E03F 9/00, F28G 1/16

(54) **Dispositif de blocage mécanique manuel d'une conduite véhiculant un fluide sous pression, en particulier d'une conduite de lavage de canalisations**

(30) Priorité: 20.04.2006 FR 0603496
(71) Demandeur: Rivard, 49640 Daumeray (FR)
(72) Inventeur: JUVIN, Florent, 49640, DAUMERAY (FR); OLLIVIER, Michel, 49220, BRAIN SUR LONGUENEE (FR)
(74) Mandataire: Livet, Marie-José

(57) **Abrégé**

Dispositif de blocage manuel d'une conduite de lavage de canalisations véhiculant un fluide sous pression équipée à son extrémité d'une tête haute pression (5) munie de buses orientées de façon à projeter contre les parois de la canalisation (C) à nettoyer des jets de fluide sous pression dirigés vers l'arrière et à propulser par réaction la tête haute pression (5) le long de cette canalisation (C), dispositif caractérisé en ce qu'il est constitué par une poignée tubulaire rigide (6, 6₁, 6₂, 6₃) destinée à recevoir la conduite de lavage (1) à sa partie interne équipée à l'une de ses extrémités d'une collerette formant semelle (9) et sur sa face latérale d'un levier articulé (8) permettant de bloquer la conduite de lavage (1) introduite dans celle-ci, et d'un dispositif de commande agissant sur l'arrivée du fluide sous pression.

## Description

La présente invention a pour objet un dispositif de blocage mécanique manuel d'une conduite flexible ou rigide véhiculant un fluide, en règle générale de l'eau sous pression, en particulier d'une conduite de lavage de canalisations.

Aussi bien dans le cadre de l'industrie que dans le domaine civil, notamment pour l'entretien des immeubles, il est fréquemment nécessaire de mettre en oeuvre des opérations de lavage de canalisations très diverses telles que des tubes de faisceaux d'échangeurs de chaleur, des gaines de vide-ordures, des tuyauteries de circulation de produits chimiques, etc...

Pour effectuer de telles opérations de lavage, on utilise classiquement des conduites (flexibles ou cannes rigides) reliées au moyen de flexibles de longueur variable à une pompe haute pression associée à des organes de commande de l'alimentation en fluide sous pression constitués par une pédale posée sur le sol dont l'enfoncement au pied permet de véhiculer le fluide sous pression vers l'outil de lavage (commande à action maintenue).

Les pressions utilisées se situent généralement entre 50 et 3 500 bars.

La conduite de lavage est équipée à son extrémité libre d'un embout fileté sur lequel est vissée une tête haute pression qui constitue l'outil de lavage proprement dit.

Cet outil de lavage a pour fonction de transformer le débit et la pression du fluide de lavage en énergie cinétique de façon à permettre un arrachement des particules, corps étrangers, salissures, produits incrustants, etc... pouvant être déposés sur la surface interne des canalisations à nettoyer.

Dans ce but, la tête haute pression est munie d'une série de buses périphériques orientées de façon à projeter violemment contre les parois de la canalisation à nettoyer des jets de fluide sous pression dirigés vers l'arrière et/ ou vers l'avant.

Simultanément ces jets haute pression exercent par réaction une composante des forces de traction dirigée vers l'avant ayant pour effet de propulser la tête haute pression et la conduite de lavage le long de la canalisation à nettoyer.

Pour laver une canalisation, un opérateur doit tout d'abord positionner la conduite de lavage en regard de l'entrée de celle-ci en la tenant avec ses deux mains et y introduire la tête haute pression.

Il doit ensuite commander l'alimentation de celle-ci en fluide sous pression en actionnant la pédale au pied puis guider manuellement la progression de la conduite de lavage dans la canalisation à nettoyer tout en la freinant ce jusqu'à ce que la tête haute pression parvienne à l'extrémité de cette canalisation.

Il doit alors ramener l'outil de lavage toujours alimenté en fluide sous pression au niveau de l'entrée de celle-ci et poursuivre ce cycle de déplacement en va et vient tant que le fluide de lavage sortant de la canalisation en cours de nettoyage n'a pas la limpidité souhaitée.

Pour amener la tête haute pression au niveau de l'entrée de la canalisation, l'opérateur doit successivement, à partir d'une position dans laquelle ses deux bras sont tendus horizontalement :
- tirer sur la conduite de lavage avec l'une de ses mains pour déplacer la tête haute pression d'un pas correspondant à l'amplitude de ses bras,
- bloquer la conduite ainsi déplacée avec sa seconde main pour l'empêcher de progresser à nouveau vers l'avant dans la canalisation,
- ramener sa première main (main tireuse) au niveau de sa seconde main (main bloquante),
- tirer à nouveau sur la conduite de lavage avec sa première main pour déplacer la tête haute pression d'un nouveau pas et ainsi de suite jusqu'à ce que la tête haute pression soit positionnée au niveau de la canalisation en cours de nettoyage.

Il est clair qu'un tel processus présente de nombreux inconvénients liés en particulier aux projections d'eau et déchets en direction de l'opérateur au départ de la tête haute pression dans la canalisation et surtout lors de son retour : en effet, lors du guidage de la conduite de lavage, les mains de l'opérateur sont exposées aux jets haute pression projetés par la tête haute pression.

De plus, lors du retour de la tête haute pression, la retenue de la conduite de lavage est aléatoire, vu que l'opérateur doit vaincre la force de traction dirigée vers l'avant, donc en sens inverse, ce alors que la conduite de lavage est très souvent recouverte de produits visqueux.

Cette situation entraîne des risques de glissement et d'échappement fortuits de la conduite de lavage ce qui peut entraîner des risques d'accidents très graves voire mortels.

Il est en outre à noter que pendant toute la durée du travail, le pied de l'opérateur doit en permanence enfoncer la pédale, donc être précisément positionné sur celle-ci, ce qui entraîne une certaine rigidité de l'opérateur et une gêne après un certain temps.

Dans ce contexte, il serait souhaitable de pouvoir disposer d'un dispositif permettant de réduire voire d'éliminer les inconvénients et dangers susmentionnés.

La présente invention a pour objet de proposer un dispositif de nature à satisfaire à cette attente.

Selon l'invention, un tel dispositif est caractérisé en ce qu'il est constitué par une poignée tubulaire rigide destinée à recevoir une conduite de lavage à sa partie interne et équipée d'une part à l'une de ses extrémités d'une collerette formant semelle pour permettre de l'appliquer autour de l'orifice d'entrée d'une canalisation à nettoyer et d'autre part sur sa face latérale d'un levier articulé permettant de bloquer la conduite de lavage introduite dans celle-ci.

La poignée tubulaire conforme à l'invention dont la longueur correspond essentiellement à la largeur d'une main constitue ainsi un manchon de guidage de la conduite de lavage lors de son coulissement dans la canalisation à nettoyer et de blocage de cette conduite, en particulier lors du retour de la tête haute pression vers l'orifice d'entrée de cette canalisation.

Un tel blocage permet d'éviter de façon sûre tout glissement et échappement fortuit de la conduite de lavage par l'opérateur dans la mesure où il peut être effectué en exerçant une simple pression sur le levier articulé.

La collerette formant semelle peut être constituée par un simple rebord, en particulier lorsque le dispositif est destiné au lavage de gaines de vide-ordures, dans ce cas, le dispositif n'est pas systématiquement collé à la canalisation ; elle est toutefois avantageusement réalisée sous la forme d'un déflecteur de jets ou d'éclaboussures de façon à permettre d'éviter que l'opérateur puisse être atteint par des projections directes de fluide haute pression souillé.

L'extrémité de la poignée tubulaire opposée à la collerette formant semelle peut elle aussi être avantageusement équipée d'un rebord contre lequel l'opérateur peut prendre appui avec l'une de ses mains (main tireuse) pour guider manuellement tout en la freinant la conduite de lavage au cours de la progression de la tête haute pression dans la canalisation à nettoyer sous l'action de la force de traction.

Bien entendu, pendant cette progression, l'opérateur doit constamment maintenir son autre main (main bloquante) autour de la poignée tubulaire et appliquer la collerette formant semelle de celle-ci à la périphérie de l'orifice d'entrée de la conduite à nettoyer.

Pour ramener la tête haute pression au niveau de l'orifice d'entrée de la canalisation à nettoyer après qu'elle ait atteint l'extrémité de cette canalisation, l'opérateur doit successivement :
- tirer sur la conduite de lavage avec l'une de ses mains (main tireuse) pour déplacer la tête haute pression d'un pas correspondant à l'amplitude de ses bras,
- bloquer la conduite ainsi déplacée en exerçant une pression sur le levier articulé avec son autre main (main bloquante),
- ramener sa main tireuse autour de la conduite de lavage, en appui contre le rebord opposé à la collerette formant semelle de la poignée tubulaire, et ainsi de suite jusqu'à ce que la tête haute pression ait atteint l'orifice d'entrée de la canalisation à nettoyer.

L'opérateur peut alors soit recommencer l'opération soit stopper l'arrivée du fluide sous pression et positionner la poignée tubulaire en regard de l'orifice d'entrée d'une autre canalisation à nettoyer.

Selon une autre caractéristique de l'invention, la poignée tubulaire est équipée à sa partie interne d'un épaulement formant butée pour la tête haute pression de façon à permettre de positionner automatiquement celle-ci à la fin de chaque cycle de lavage.

L'épaulement formant butée délimite ainsi un logement de réception de la tête haute pression contigu à la collerette formant semelle.

Compte tenu de la présence de cet épaulement formant butée, il n'est pas possible d'introduire directement la conduite de lavage équipée de la tête haute pression à la partie interne de la poignée tubulaire par l'extrémité de celle-ci opposée à la collerette formant semelle de sorte qu'elle ressorte par son autre extrémité.

Il est par suite nécessaire de dévisser la tête haute pression avant d'effectuer cette introduction puis de la revisser sur l'embout fileté de la conduite de lavage après que cet embout ait été déplacé au-delà de la collerette formant semelle, ce qui correspond néanmoins à un montage particulièrement simple et rapide.

L'opérateur n'a alors plus qu'à appliquer la collerette formant semelle à la périphérie de l'orifice d'entrée de la canalisation à nettoyer et à actionner les organes de commande de l'alimentation de la conduite en fluide sous pression ; la tête haute pression se déplace alors automatiquement vers l'avant dans la canalisation et l'opérateur peut la bloquer lorsqu'il le juge nécessaire en comprimant le levier articulé.

Selon une caractéristique préférentielle de l'invention, les organes de commande de l'alimentation de la conduite de lavage en fluide sous pression sont montés sur la poignée tubulaire.

Il s'agit là d'une caractéristique particulièrement avantageuse dans la mesure où elle permet de réunir dans une seule main de l'opérateur (main bloquante) les fonctions de blocage de la conduite de lavage et de commande de l'alimentation en fluide sous pression, libérant ainsi l'autre main de l'opérateur (main tireuse) qui a pour seule fonction de tirer sur la conduite de lavage lors du retour de la tête haute pression vers l'orifice d'entrée de la canalisation à nettoyer.

Cette caractéristique permet également à l'opérateur de déplacer légèrement son corps en cours de lavage sans interrompre les jets haute pression vu qu'il n'a alors plus à actionner une pédale.

Les caractéristiques du dispositif qui fait l'objet de l'invention seront décrites plus en détail en se référant aux dessins annexés dans lesquels :
- la figure 1 est un schéma représentatif du processus de nettoyage d'un faisceau d'échangeurs de chaleur conformément à l'art antérieur,
- la figure 2 est un détail de la figure 1 représentant l'extrémité de la tête haute pression,
- les figures 3, 4, 5 et 6 représentent quatre exemples de configuration d'une poignée tubulaire rigide,
- les figures 7 et 8 sont des schémas similaires à la figure 1 mais selon lesquels on utilise deux variantes du dispositif conforme à l'invention,
- la figure 9 est une vue de détail de la figure 1 explicative de la manipulation de la poignée tubulaire.

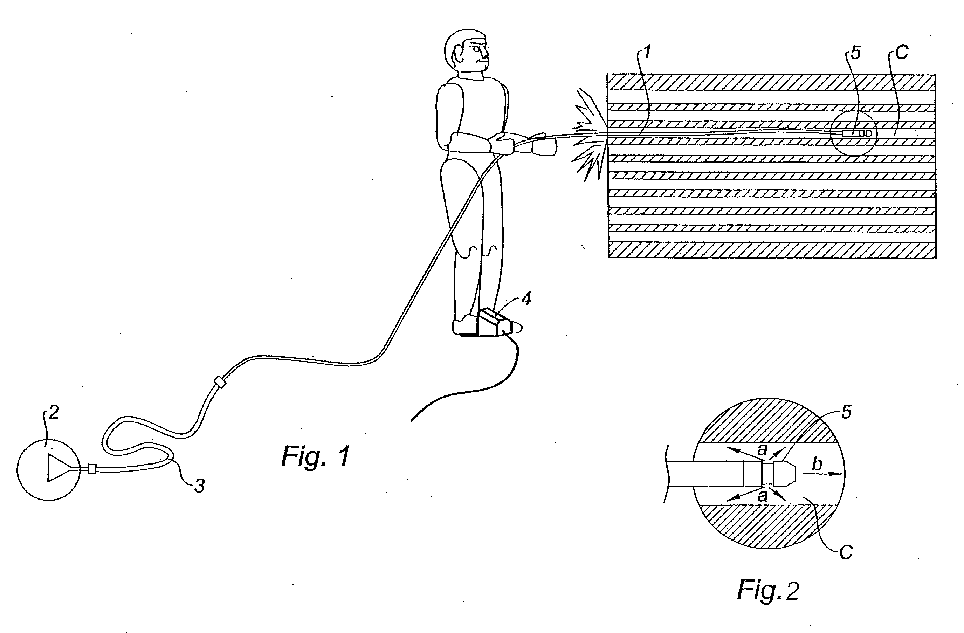

Selon la figure 1, pour nettoyer une canalisation C, (à savoir une canalisation d'un faisceau d'échangeurs de chaleur dans l'exemple de réalisation non limitatif représenté sur les figures), l'opérateur utilise un outil de lavage constitué par une conduite de lavage 1 flexible ou le cas échéant rigide reliée à une pompe haute pression 2 par un flexible 3 de longueur variable.

La pompe haute pression 2 est associée à des organes de commande de l'alimentation en fluide sous pression de la conduite de lavage 1 constitués par une pédale 4 que l'opérateur doit actionner avec le pied.

La conduite de lavage 1 est équipée à son extrémité libre opposée à la pompe haute pression d'un embout fileté non représenté sur lequel est vissée une tête haute pression 5 représentée sur la figure 2.

Selon la figure 2, la tête haute pression 5 est munie d'une série de buses réparties sur sa périphérie et orientées de façon à projeter contre les parois de la canalisation C des jets de fluide sous pression dirigés vers l'arrière et/ou vers l'avant schématisés par les flèches a.

Ces jets permettent de nettoyer la canalisation C en arrachant violemment les particules, corps étrangers, salissures, produits incrustants... qui adhèrent sur ses parois internes.

Simultanément, les jets haute pression a exercent par réaction une force de traction b ayant pour effet de propulser la tête haute pression 5 et par suite la conduite de lavage 1 sur laquelle elle est vissée le long de la canalisation C.

Selon la figure 1, lors du processus de nettoyage de la canalisation C, l'opérateur doit tenir la conduite de lavage 1 avec ses deux mains de façon à positionner la tête haute pression 5 dans l'orifice d'entrée de cette canalisation puis actionner la pédale 4 pour alimenter la conduite de lavage 1 en fluide sous pression ce qui entraîne automatiquement le déplacement de la tête haute pression 5 le long de la canalisation C selon la flèche b.

Lors de cette progression, l'opérateur doit constamment actionner la pédale 4 et guider manuellement la conduite de lavage 1 tout en la freinant jusqu'à ce que la tête haute pression 5 parvienne à l'extrémité de la canalisation C.

A ce moment, et en exerçant toujours une pression sur la pédale 4, il doit progressivement ramener la tête haute pression 5 dans sa position initiale au niveau de l'orifice d'entrée de la canalisation C, ce pas à pas, en tirant sur la conduite de lavage 1 avec l'une de ses mains (main tireuse) et en la bloquant avec son autre main (main bloquante), ce qui comme il a déjà été indiqué, correspond à une opération particulièrement incommode et surtout dangereuse.

Le dispositif de blocage mécanique manuel conforme à l'invention permet de remédier à ces inconvénients.

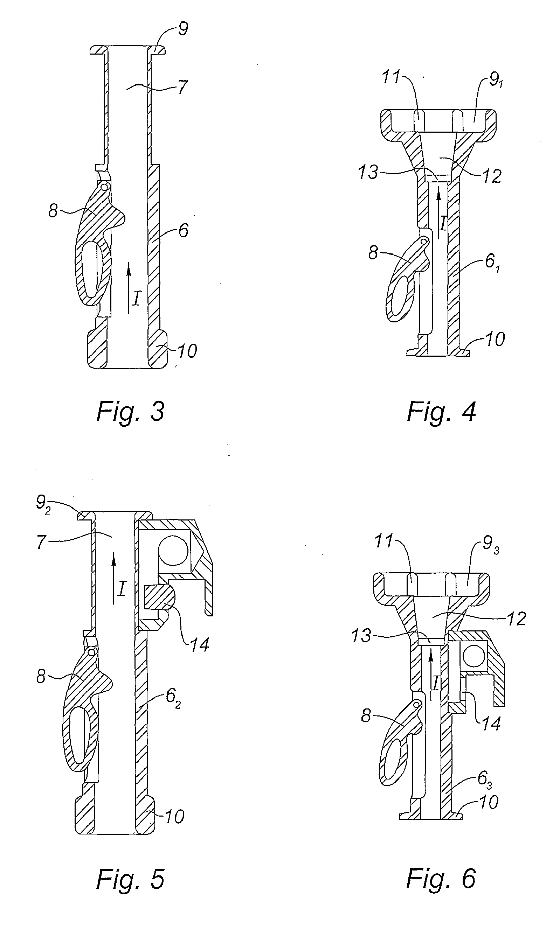

Dans sa variante de base représentée sur la figure 3, ce dispositif est constitué par une poignée tubulaire rigide 6 destinée à recevoir la conduite de lavage 1 à sa partie interne 7 comme schématisé par la flèche 1 et équipée sur sa surface latérale d'un levier articulé 8 permettant de bloquer cette conduite.

La poignée tubulaire 6 est équipée à l'une de ses extrémités d'une collerette formant semelle 9 permettant de l'appliquer ou non contre l'orifice d'entrée d'une canalisation C à nettoyer.

L'extrémité de la poignée tubulaire 6 opposée à la collerette formant semelle 9 est équipée d'un rebord 10 faisant office d'appui pour l'une des mains de l'opérateur (main tireuse).

Selon la variante de réalisation de la poignée tubulaire 6₁ représentée sur la figure 4, la collerette formant semelle 9₁ est réalisée sous la forme d'un déflecteur de jets 11.

Selon cette variante de réalisation, la poignée tubulaire 6₁ est munie d'un logement de réception 12 de la tête haute pression 5 délimité par un épaulement formant butée 13.

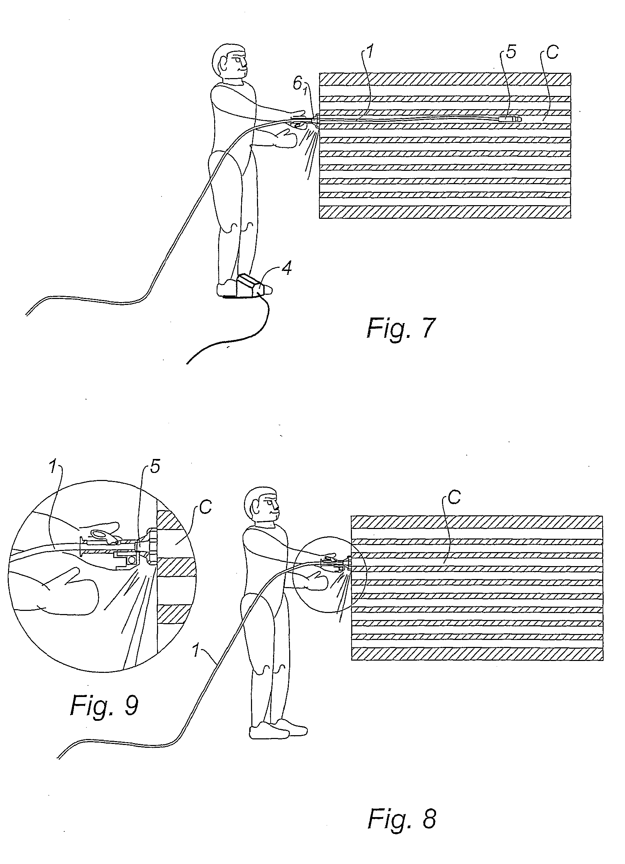

Selon la figure 7, lors du processus de nettoyage d'une canalisation C en utilisant une telle poignée tubulaire 6₁, l'opérateur doit dévisser la tête haute pression 5 avant d'introduire la conduite de lavage 1 dans celle-ci puis revisser cette tête 5 sur l'embout fileté.

L'opérateur peut ensuite positionner la tête haute pression 5 dans l'orifice d'entrée de la canalisation C à nettoyer en tenant la poignée tubulaire 6₁ avec une seule main (main bloquante) puis actionner la pédale 4 pour alimenter la conduite de lavage 1 en fluide sous pression, ce qui entraîne automatiquement le déplacement de la tête haute pression 5 le long de la canalisation C.

Lors de cette progression, l'opérateur doit constamment actionner la pédale 4 et peut bloquer la conduite de lavage 1 lorsqu'il le juge nécessaire en actionnant le levier articulé 8 avec sa main bloquante de façon à freiner sa progression, ce jusqu'à ce que la tête haute pression parvienne à l'extrémité de la canalisation C.

Lors de ce déplacement, la seconde main de l'opérateur (main tireuse) reste libre.

Lorsque la tête haute pression 5 a atteint l'extrémité de la canalisation C, l'opérateur doit progressivement la ramener dans sa position initiale dans le logement de réception 12 en butée contre l'épaulement 13, ce en exerçant toujours une pression sur la pédale 4.

A cet effet, il doit positionner sa main tireuse autour de la conduite de lavage 1 en appui contre le rebord 10 de la poignée tubulaire 6₁ puis successivement :
- tirer sur la conduite de lavage 1 avec sa main tireuse pour déplacer la tête haute pression 5 d'un pas correspondant à l'amplitude de ses bras,
- bloquer la conduite 1 ainsi déplacée en exerçant une pression sur le levier articulé 8 avec sa main bloquante,
- ramener sa main tireuse autour de la conduite de lavage 1 en appui contre le rebord 10 de la poignée tubulaire 6₁ et ainsi de suite jusqu'à ce que la tête haute pression 5 soit positionnée dans le logement de réception 12.

Selon la variante de réalisation représentée sur la figure 5, la poignée tubulaire 6₂ a la même configuration que la poignée tubulaire 6 représentée sur la figure 3 mais est en outre équipée d'organes de commande 14 de l'alimentation de la conduite de lavage 1 en fluide sous pression remplaçant la pédale 4.

Selon la variante de réalisation représentée sur la figure 6, la poignée tubulaire 6₃ a la même configuration que la poignée tubulaire 6₁ représentée sur la figure 4 mais est également en outre équipée d'organes de commande 14 de l'alimentation de la conduite de lavage 1 en fluide sous pression remplaçant la pédale 4.

Selon les figures 8 et 9, l'opérateur peut ainsi commander directement l'alimentation de la conduite de lavage 1 en fluide sous pression à partir de la poignée tubulaire 6₂, 6₃ sans avoir à actionner une pédale indépendante.

## Revendications

1. Dispositif de blocage mécanique manuel d'une conduite flexible ou rigide véhiculant un fluide sous pression, en particulier d'une conduite de lavage de canalisations, cette conduite (1) étant reliée à une pompe haute pression (2) associée à des organes de commande de l'alimentation en fluide sous pression et étant équipée à son extrémité d'un embout fileté sur lequel est vissée une tête haute pression (5) munie de buses orientées de façon à projeter contre les parois de la canalisation (C) à nettoyer des jets de fluide sous pression dirigés vers l'arrière et/ou vers l'avant et à propulser par réaction la tête haute pression (5) le long de cette canalisation (C),
dispositif **caractérisé en ce qu'**
il est constitué par une poignée tubulaire rigide (6, 6₁, 6₂, 6₃) destinée à recevoir la conduite de lavage (1) à sa partie interne et équipée d'une part à l'une de ses extrémités d'une collerette formant semelle (9) pour permettre de l'appliquer autour de l'orifice d'entrée d'une canalisation (C) à nettoyer et d'autre part sur sa face latérale d'un levier articulé (8) permettant de bloquer la conduite de lavage (1) introduite dans celle-ci.

2. Dispositif selon la revendication 1,
**caractérisé en ce que**
la collerette formant semelle (9) est réalisée sous la forme d'un déflecteur de jets (11).

3. Dispositif selon l'une quelconque des revendications 1 et 2,
**caractérisé en ce que**
l'extrémité de la poignée tubulaire (6, 6₁, 6₂, 6₃) opposée à la collerette formant semelle (9) est équipée d'un rebord (10).

4. Dispositif selon l'une quelconque des revendications 1 à 3,
**caractérisé en ce que**
les organes de commande de l'alimentation de la conduite de lavage (1) en fluide sous pression sont montés sur la poignée tubulaire (6₂, 6₃).

5. Dispositif selon l'une quelconque des revendications 1 à 4,
**caractérisé en ce que**
la poignée tubulaire (6₁, 6₃) est équipée à sa partie interne d'un épaulement (13) formant butée pour la tête haute pression (5).
